# FASCICULE DE BREVET EUROPEEN

(11) **EP 0 497 667 B1**
(45) Date de publication et mention de la délivrance du brevet: **22.11.1995**
(21) Numéro de dépôt: 92400186.0
(22) Date de dépôt: 24.01.1992
(51) Int. Cl.: H04Q 11/00, H04L 12/56

(54) **Matrice de commutation photonique**
Optische Schaltmatrix
Optical switch matrix

(30) Priorité: 29.01.1991 FR 9100978
(43) Date de publication de la demande: 05.08.1992
(73) Titulaire: ALCATEL CIT, 75008 Paris (FR)
(72) Inventeur: Jacob, Jean-Baptiste, F-22700 Perros-Guirec (FR); Le Roy, Guy, F-22300 Lannion (FR); Gabriagues, Jean-Michel, F-91530 Le Val Saint-Germain (FR)
(74) Mandataire: Sciaux, Edmond

(56) Documents cités:
- EP-A- 0 347 903
- PROCEEDINGS OF THE INTERNATIONAL SWITCHING SYMPOSIUM 1990, Stockholm, 28 mai - 1 juin 1990, vol. 1, pages 67-74; A. DE BOSIO et al.: "Electro-optical switching node based on fast packet and frequency switching techniques"
- IEEE JOURNAL ON SELECTED AREAS IN COMMUNICATIONS, vol. 6, no. 7, août 1988, pages 1096-1106, New York, US; R.A. THOMPSON: "Architectures with improved signal-to-noise ratio in photonic systems with fiber-loop delay lines"

## Description

L'invention concerne une matrice de commutation photonique permettant de réaliser un réseau de connexion multi-étages. Elle permet des connexions point à point et point à multipoints, pour commuter des données sous la forme de cellules de longueur fixe, multiplexées par un multiplexage temporel asynchrone, sur des fibres optiques.

On connaît, par l'article de S.Kuroyanagi et al : "ATM photonic switching network", référence 14B2 de TOPICAL MEETING ON PHOTONIC SWITCHING, KOBE, JAPAN, April 12-14, 1990, une matrice de commutation photonique comportant :
- un module d'interface d'entrée, sur chacune des n entrées de la matrice, pour identifier les cellules arrivant à cette entrée, en lisant une étiquette de canal virtuel ou de faisceau virtuel contenue dans l'entête de la cellule, et pour convertir la longueur d'onde de chaque cellule en une longueur d'onde correspondant à une sortie de la matrice;
- des sélectionneurs de cellules, constitués chacun d'un diffuseur et de filtres, pour distribuer les cellules vers les sorties de la matrice en fonction de leurs longueurs d'onde;
- une mémoire tampon optique pour chaque sortie, pour stocker dans cette mémoire tampon des cellules destinées à une même sortie et qui peuvent être en conflit pour accéder à cette sortie.

Ce type connu de matrice de commutation a pour inconvénient de comporter une mémoire tampon optique pour chaque sortie de matrice. Chacune de ces mémoires tampons comporte :
- m mémoires optiques ayant une capacité égale à une cellule et pouvant être constituée d'une ligne à retard optique;
- un commutateur n x m utilisant la commutation par division spectrale.

Ce commutateur n x m comporte : des convertisseurs de longueur d'onde pour convertir la longueur d'onde de chaque cellule, cellule par cellule; un combineur; un diffuseur; et des filtres accordables pour aiguiller chaque cellule dans l'une des mémoires optiques. Les mémoires optiques étant reliées en série, elles permettent de réaliser un retard compris entre 0 et m fois la durée d'une cellule.

Cette matrice de type connu a pour inconvénient de comporter une mémoire tampon pour chaque sortie de la matrice, ce qui multiplie le nombre de composants et donc le coût de réalisation.

Le but de l'invention est de proposer une matrice de commutation photonique plus simple et moins coûteuse à réaliser que cette matrice de type connu, tout en permettant de réaliser un réseau de connexion multi-étages au moyen d'une combinaison de plusieurs matrices selon l'invention, et en permettant des connexions point à multipoints aussi bien que des connexions point à point.

L'objet de l'invention est une matrice de commutation photonique, comportant n entrées et n sorties, pour commuter des données sous la forme de cellules de longueur fixe, multiplexées par un multiplexage temporel asynchrone, sur des fibres optiques, comportant :
- une pluralité de convertisseurs de longueur d'onde situés respectivement aux entrées de la matrice pour attribuer une longueur d'onde à chaque cellule appliquée à une entrée de la matrice;
- une mémoire tampon optique commune à toutes les sorties de la matrice pour stocker chaque cellule pendant une durée sélectionnable entre 0 et k.T_{c}, où k est un nombre entier et où T_{c} est la durée d'une cellule;
- un étage d'aiguillage spatial comportant un filtre pour chaque sortie de la matrice, pour ne laisser passer vers une sortie donnée que les cellules ayant une longueur d'onde donnée;
- des moyens de commande pour commander les convertisseurs et la mémoire tampon en fonction d'information de routage indiquant, pour chaque cellule, la sortie de la matrice à laquelle cette cellule est destinée, et pour sélectionner la durée de stockage de chaque cellule dans la mémoire tampon de manière à constituer une file d'attente pour chaque sortie, évitant des conflits entre deux cellules à commuter vers une même sortie;
   caractérisée en ce que la mémoire tampon comporte :
- K+1 lignes à retard procurant respectivement des retards 0,...,k.T_{c}, et ayant des sorties couplées à des entrées de l'étage d'aiguillage spatial;
- k+1 combineurs ayant chacun une sortie couplée à une entrée d'une ligne à retard et ayant n entrées;
- n diffuseurs, ayant chacun une entrée constituant une entrée de la mémoire tampon, et ayant sorties;
- n portes optiques reliant chacune une sortie de l'un des n diffuseurs à une entrée de l'un des combineurs, et étant commandées par les moyens de commande de telle sorte que chaque diffuseur est relié à un seul combineur, à chaque instant.

La matrice de commutation ainsi caractérisée ne comporte qu'une mémoire tampon pour stocker toutes les cellules, quelle que soit la sortie à laquelle elles sont destinées. Sa réalisation est donc plus simple et moins coûteuse que la matrice de commutation de type connu.

L'invention sera mieux comprise et d'autres caractéristiques apparaîtront à l'aide de la description ci-dessous et des figures l'accompagnant :
- la figure 1 représente le schéma synoptique d'une partie d'un réseau de connexion comportant une pluralité de matrices de commutation selon l'invention;
- la figure 2 représente le schéma synoptique de l'une des matrices de commutation que comporte cet exemple de réseau de connexion.

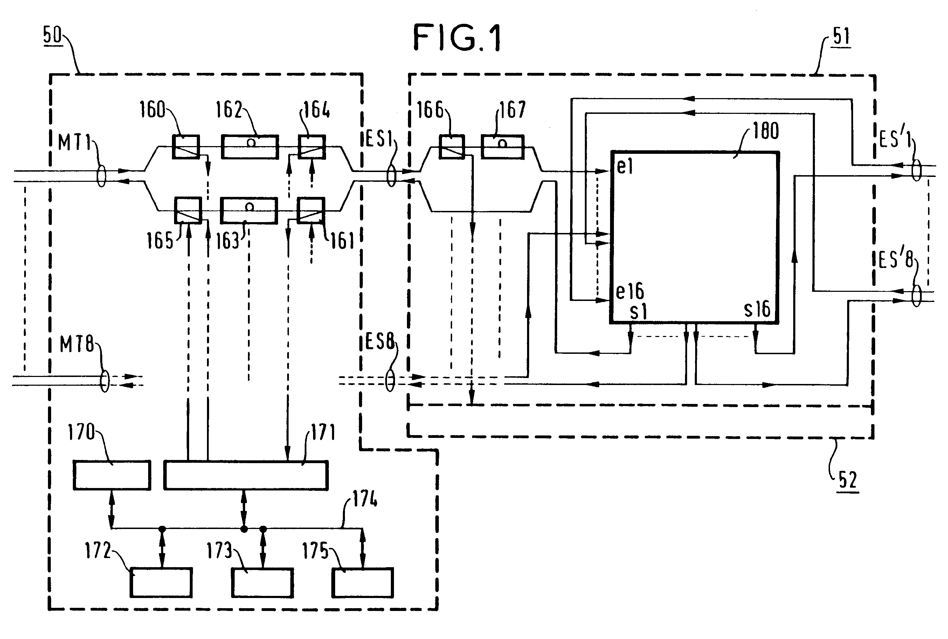

La figure 1 représente, par exemple, une partie d un premier étage d'un réseau de connexion qui peut en comporter trois par exemple. La partie représentée comporte : un dispositif 50 situé à l'entrée du réseau de connexion et relié à des multiplex temporels asynchrones MT1,...,MT8; une matrice de commutation 51 reliée par des multiplex d'entrée-sortie ES1,...,ES8 au dispositif 50, et reliée par des multiplex d entrée-sortie ES′1,...,ES′8 à un autre étage, non représenté, du réseau de connexion; et un dispositif de commande 52 qui est associé à la matrice 51.

En pratique, cette matrice 51 est constituée d'une matrice 180, comportant 16 entrées correspondant aux lignes de la matrice 180, et 16 sorties correspondant aux colonnes de la matrice 180. Chaque entrée-sortie ES1,...,ES8 de la matrice 51 est donc constituée d'une entrée et d'une sortie séparées, reliées respectivement à l'une des 16 entrées s1,...,s16 de la matrice 180 et à l'une des 16 sorties S1,...,S16 de la matrice 180.

La matrice 51 comporte en outre seize coupleurs à trois accès, et seize lignes à retard, permettant de prélever quatre bits de routage dans chaque cellule et de les fournir au dispositif de commande 52. A titre d'exemple, l'entrée-sortie ES1 est reliée à l'entrée e1 de la matrice 180 par un coupleur 166 en série avec une ligne à retard 167 qui procure un retard égal au temps de traitement du dispositif 52 pour interprêter les bits de routage. L'entrée-sortie ES1 est reliée en outre, directement, à la sortie s1 de la matrice 180. Un accès du coupleur 166 est relié à une entrée du dispositif de commande 52 dont le schéma synoptique sera détaillé plus loin.

Le dispositif 50 comporte 8 paires de coupleurs à 3 accès, telles que 160, 161; 8 paires de lignes à retard, telles que 162, 163; et 8 paires de coupleurs à trois accès et une entrée de commande électrique, telles que 164, 165. En effet, chaque multiplex bidirectionnel MT1,...,MT8 est acheminé dans le dispositif 50 par deux voies monodirectionnelles, ce qui conduit à doubler les composants de ce dispositif.

Le dispositif 50 comporte en outre :
- un microprocesseur 170;
- une interface d'entrée-sortie 171;
- une mémoire de traduction 172;
- une mémoire de signalisation 173;
- une mémoire de police 175;
- un bus 174 reliant tous les composants ci-dessus.

Les cellules en provenance de terminaux d'abonné, par l'intermédiaire d'un concentrateur non représenté, traversent successivement le coupleur 160, la ligne à retard 162 puis le coupleur 164. Le coupleur 160 est un coupleur passif dont le troisième accès est relié à une entrée de l'interface 171 pour lui transmettre cinq octets d'en-tête de chaque cellule. La ligne à retard 162 procure un retard égal au temps de traitement de cette en-tête par le microprocesseur 170.

Le microprocesseur 170 assure : la vérification de cette en-tête en calculant un mot de détection d'erreur et en le comparant à celui contenu dans l'entête; une traduction de l'étiquette de circuit virtuel ou éventuellement de faisceau virtuel, en consultant la mémoire 172 qui fournit une nouvelle valeur d'étiquette ; l'adjonction d'une étiquette de routage, à l'en-tête déjà existante; le calcul d'un nouveau mot de détection d'erreur pour tenir compte de la nouvelle étiquette de circuit virtuel, ou de faisceau virtuel; et la fonction police, de manière classique. Le coupleur 164 est un coupleur actif qui permet d'introduire dans la cellule une nouvelle en-tête, en la faisant précéder de 3 octets d'étiquette de routage. Pour cela, le coupleur 164 comporte un troisième accès relié à une sortie optique de l'interface 171 ; et une entrée de commande électrique reliée à une sortie l'interface 171, fournissant un signal électrique de validation. Le coupleur 164 est utilisé en outre pour émettre des cellules de signalisation, ou de maintenance, à la place de cellules vides.

La mémoire de signalisation 173 stocke des cellules de signalisation arrivant ou partant du réseau de connexion 5, par exemple des cellules de signalisation provenant, ou à destination, d'un système de commande du réseau général de télécommunication.

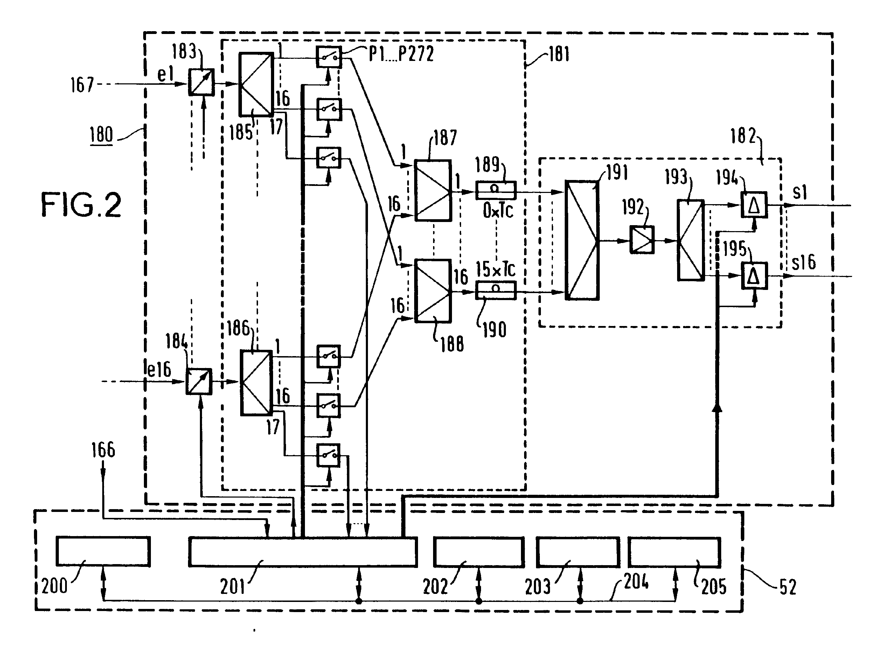

La figure 2 représente un schéma synoptique plus détaillé de la matrice de commutation 180 et du dispositif de commande 52 qui lui est associé. Le dispositif 52 comprend : un micro-processeur 200; une interface d'entrée-sortie, 201; une mémoire de routage, 202; une mémoire de pointeurs, 203; une mémoire de signalisation, 205; et un bus 204 reliant tous ces éléments entre eux.

La matrice de commutation 180 comprend : 16 convertisseurs de longueur d'onde 183,..., 184; une mémoire-tampon 181; et un dispositif de commutation spatial 182. Les convertisseurs 183, ..., 184 ont : 16 entrées reliées respectivement aux 16 entrées e1,...,e16 de la matrice 180, 16 sorties reliées respectivement à 16 entrées de la mémoire-tampon 181, et 16 entrées de commande électriques reliées respectivement à des sorties de l'interface 201 du dispositif de commande 52.

Le dispositif 182 réalise une commutation spatiale pour transférer chaque cellule reçue sur l'une des 16 entrées e1,..., e16 de la matrice 180 vers l'une des 16 sorties s1,..., s16 de cette matrice 180.

La mémoire-tampon 181 a pour fonction de retarder les cellules, avant leur transfert dans le dispositif 182, pour résoudre les problèmes de contention, c'est-à-dire de conflit entre deux cellules arrivant simultanément et destinées à une même sortie de la matrice 180. Il est nécessaire de pouvoir retarder dans 16 files d'attente, de type FIFO, des cellules à destination de n'importe laquelle des 16 sorties s1,...,s16. Dans la matrice de commutation 180, les cellules peuvent prendre 16 couleurs différentes au moyen des convertisseurs 183 à 184, et la couleur des cellules permet de distinguer 16 files d'attente correspondant respectivement aux 16 sorties, tout en stockant les cellules dans un jeu de lignes à retard qui est commun pour toutes ces sorties. Ces files d'attente sont gérées par le microprocesseur 200 au moyen de pointeurs stockés dans la mémoire de pointeurs 203.

La valeur de chaque pointeur est comprise entre 0 et k-1, où k est le nombre des lignes à retard que comporte la mémoire 181. Ici k=16. Une prochaine cellule à stocker dans une file d'attente donnée sera inscrite dans la ligne à retard de rang q+1, si le pointeur de cette file est égal à q, et si q est inférieur à k-1. Si q =k-1 la file est saturée et cette cellule sera perdue, car elle ne peut être inscrite dans la mémoire tampon 181.

Les convertisseurs 183, ..., 184 sont commandés électriquement par le micro-processeur 200, via l'interface 201, en fonction de 4 bits que le dispositif 52 extrait de l'étiquette de routage, ces 4 bits indiquant le numéro de la sortie à laquelle est destinée la cellule. La couleur donnée à la cellule correspond à cette sortie de la matrice 180.

La mémoire de routage 202 stocke :
- des paramètres de commande des convertisseurs 183,...,184, pour attribuer une couleur à chaque cellule, selon la sortie à laquelle elle est destinée;
- un indicateur pour chaque cellule, indiquant si celle-ci fait partie d'une connexion point à point ou d'une connexion point à multipoints, dans ce dernier cas la mémoire de routage 202 fournissant des paramètres pour accorder une pluralité de filtres en sortie du dispositif 182.

La mémoire-tampon 181 comporte : 16 diffuseurs 185,..., 186; 272 portes optiques P1,...,P272; 16 combineurs 187,..., 184; et 16 lignes à retard 189,..., 190, procurant des retards respectivement égaux à 0,Tc, 2Tc, 3Tc,...15Tc, où Tc est la période de cellule. Ces lignes à retard permettent de réaliser pour une cellule quelconque un retard compris entre 0 et 15Tc, indépendamment de la couleur de la cellule. Les diffuseurs 185,..., 186 comportent chacun une entrée constituant respectivement l'une des 16 entrées de la mémoire-tampon 181, et comportent 17 sorties reliées respectivement à l'une des 272 portes optiques P1, ...,P272.

Parmi les 17 sorties de chaque diffuseur, 16 sorties sont reliées par ces portes respectivement à une entrée de l'un des 16 combineurs 187,...,188; et la dix-septième sortie est relié par une porte à une entrée de l'interface 201 d'entrée-sortie, du dispositif de commande 52. Cette entrée de l'interface 201 est munie d'un dispositif de conversion optique-électronique, non représenté, et permet au micro-processeur 200 de recevoir le contenu des cellules de signalisation. Chaque entrée de chacun des combineurs 187,...,188 est ainsi reliée par l'une des portes P1,...,P272 à une sortie de l'un des diffuseurs 185,...,186. Ainsi toute cellule arrivant sur l'une quelconque des 16 entrées de la matrice 180 peut transiter par l'un quelconque des 16 combineurs 187,...,188, en ouvrant l'une des porte P1,...P272, celles-ci étant commandées independamment les unes des autres par le micro-processeur 200 via l'interface 201.

Chaque combineur 187, ..., 188 possède une sortie qui est reliée à l'une des lignes à retard 189,...,190. Ainsi le dispositif de commande 52 choisit de retarder, d'un temps compris entre 0 et 15Tc, chacune des cellules arrivant sur l'une des 16 entrées de la matrice 180, en fonction des pointeurs contenus dans la mémoire 203, qui permettent de surveiller le flux de cellules à destination de chacune des 16 sorties, et de savoir quel est le retard attribué à chaque cellule. La mémoire-tampon 181 se comporte comme 16 files d'attente FIFO correspondant aux 16 sorties de la mémoire 180.

Le nombre de cellules stockables dans chaque file d'attente est fixe par le nombre k des lignes à retard 189,..., 190. Dans cet exemple de réalisation, il est égal à seize. L'article "Buffer Sizing in an ATM Switck for both ATM and STM trafics" international Journal of digital and analog Cabled Systems vol 2, 247-252 (1989) montre qu'une mémoire tampon de sortie ayant une capacité de 16 cellules, par sortie, permet d'obtenir un taux de porte de cellules égal à 10⁻¹⁰. Il est possible d'obtenir un taux de perte donné, en choisissant le nombre k des lignes à retard 189,...,190.

Dans cet exemple de réalisation, les matrices du réseau de connexion assurent aussi la remise en ordre des cellules à destination d'un concentrateur, leur rang initial étant connu grâce à deux bits de routage. Pour retrouver leur rang initial, elles doivent être lues dans cet ordre, à l'intérieur de la mémoire-tampon 181. La file d'attente de chaque multiplex de sortie est gérée par le microprocesseur 200, la mémoire de routage 202, et la mémoire de pointeurs 203, comme quatre "sous-files d'attente" indépendantes destinées à stocker respectivement les cellules de rang 1, 2, 3, 4.

Considérons la mise en file d'attente de quatre cellules qui sont à émettre, dans l'ordre C1, C2, C3, C4 sur une sortie donnée de la matrice 181, alors qu'elles sont arrivées à des entrées de la matrice 181 dans l'ordre C2, C1, C4, C3, par exemple. La cellule C2 est inscrite dans la deuxième sous-file d'attente, la cellule C1 est inscrite dans la première sous-file d'attente, la cellule C4 est inscrite dans la quatrième sous-file d'attente, et la cellule C3 est inscrite dans la troisième sous-file d'attente. La sous-file d'attente d'écriture est choisie parmi les quatres sous-files d'attente de la file d'attente correspondant à la sortie donnée, grâce aux 2 bits de routage indiquant le rang de chaque cellule. La sous-file d'attente de lecture est choisie de manière périodique : première, puis deuxième, puis troisième, puis quatrième, etc.

Le dispositif de commutation spatial 182 comporte :
- un combineur 191 pot 16 entrées reliées respectivement aux 16 sorties de la mémoire-tampon 181, constituées, par les sorties des 16 lignes à retard 189,...,190;
- un amplificateur optique 192 amplifiant le signal optique fourni par une sortie du combineur 191;
- un diffuseur 193 ayant une entrée reliée à l'amplificateur 192, et 16 sorties;
- 16 filtres 194,..., 195 ayant chacun : une entrée reliée respectivement à une sortie du diffuseur 193; une entrée de commande électrique reliée à une sortie de l'interface 201 et sélectionnant une couleur parmi 16; et une sortie constituant l'une des 16 sorties s1,..., s16 de la matrice de commutation 180.

Le combineur 191, l'amplificateur 192, et le diffuseur 193 permettent d'appliquer toutes les cellules sortant de la mémoire-tampon 181 aux 16 filtres 194,...,195. Chaque filtre ne laisse passer que la couleur sélectionnée par le signal électrique de commande que fournit le dispositif de commande 52 pour chaque période de cellule. Généralement ils sont commandés pour filtrer chacun une couleur différente, pour acheminer une cellule d'un point à un autre point unique. Dans certains cas, par exemple, pour diffuser un message simultanément vers plusieurs destinataires, ces filtres peuvent être commande pour filtrer une même couleur dans plusieurs filtres correspondant à plusieurs destinataires pour une même cellule.

## Revendications

1. Matrice de commutation photonique comportant n entrées et n sorties, pour commuter des données sous la forme de cellules de longueur fixe, multiplexées par un multiplexage temporel asynchrone, sur des fibres optiques, comportant :
- une pluralité de convertisseurs de longueur d'onde (183,...,184) situés respectivement aux entrées de la matrice (180) pour attribuer une longueur d'onde à chaque cellule appliquée à une entrée de la matrice;
- une mémoire tampon optique (181) commune à toutes les sorties de la matrice (180) pour stocker chaque cellule pendant une durée sélectionnable entre 0 et k.T_{c}, où k est un nombre entier et où T_{c} est la durée d'une cellule;
- un étage d'aiguillage spatial (182) comportant un filtre (194,...,195) pour chaque sortie de la matrice (180), pour ne laisser passer vers une sortie donnée que les cellules ayant une longueur d'onde donnée;
- des moyens de commande (52) pour commander les convertisseurs (183,...,184) et la mémoire tampon (181) en fonction d'information de routage indiquant, pour chaque cellule, la sortie de la matrice à laquelle cette cellule est destinée, et pour sélectionner la durée de stockage de chaque cellule dans la mémoire tampon (181) de manière à constituer une file d'attente pour chaque sortie, évitant des conflits entre deux cellules à commuter vers une même sortie;
caractérisée en ce que la mémoire tampon (181) comporte :
- (k+1) lignes à retard (189,...,190) procurant respectivement des retards 0,...,k.T_{c}, et ayant des sorties couplées à des entrées de l'étage (182) d'aiguillage spatial;
- (k+1) combineurs (187,...,188) ayant chacun une sortie couplée à une entrée d'une ligne à retard (189,...,190) et ayant n entrées;
- n diffuseurs (185,...,186), ayant chacun une entrée constituant une entrée de la mémoire tampon (181), et ayant (k+1) sorties;
- (k+1).n portes optiques (P1,...,P272) reliant chacune une sortie de l'un des n diffuseurs (185,...,186) à une entrée de l'un des (k+1) combineurs (187,...,188), et étant commandées par les moyens de commande (52) de telle sorte que chaque diffuseur (185,...,186) est relié à un seul combineur (187,...,188), à chaque instant.

2. Matrice de commutation photonique selon la revendication 1, recevant des cellules dont l'ordre chronologique initial a été modifié par permutation à l'intérieur de groupes contenant P cellules;
caractérisée en ce que, pour rétablir l'ordre chronologique à l'intérieur de chaque groupe contenant P cellules, les moyens de commande (52) comportent des moyens (200, 202, 203) pour sélectionner la durée de stockage de chaque cellule dans la mémoire tampon (181) de manière à constituer P sous-files d'attente dans chaque file d'attente correspondant à une sortie, chaque cellule destinée à une sortie donnée étant inscrite dans l'une des sous-files d'attente de la file attente correspondant à cette sortie, en fonction d'informations de routage indiquant le rang initial de cette cellule dans un groupe de P cellules; et les cellules destinées à une sortie donnée étant lues en lisant successivement une cellule dans chaque sous-file d'attente correspondant à cette sortie, ces sous-files d'attente étant lues dans un ordre prédéterminé.

## Patentansprüche

1. Optische Schaltmatrix mit n Eingängen und n Ausgängen, die Daten in Form von Zellen fester Länge, die mittels asynchroner Zeitmultiplexierung verschachtelt sind, auf Lichtleitfasern durchschaltet,
- mit zahlreichen Wellenlängenwandlern (183 bis 184), die an den Eingängen der Matrix (180) liegen, um jeder an einen Eingang der Matrix angelegten Welle eine Wellenlänge zuzuweisen,
- mit einem optischen Pufferspeicher (181), der für alle Ausgänge der Matrix (180) gemeinsam vorgesehen ist und jede Zelle während einer wählbaren Dauer zwischen 0 und k·Tc speichert, wobei k eine ganze Zahl und Tc die Dauer einer Zelle ist,
- mit einer räumlichen Schaltstufe (182), die für jeden Ausgang der Matrix (180) ein Filter (194 bis 195) enthält, um an einen gegebenen ausgang nur die Zellen mit einer bestimmten Wellenlänge durchzulassen,
- mit Steuermitteln (52), um die Wandler (183 bis 184) und den Pufferspeicher (181) abhängig von einer Leitweginformation zu steuern, die für jede Zelle den Ausgang der Matrix angibt, für den diese Zelle bestimmt ist, und um die Speicherdauer jeder Zelle im Pufferspeicher (181) so auszuwählen, daß sich eine Warteschlange für jeden Ausgang ergibt, wobei Konflikte zwischen zwei an einen gemeinsamen Ausgang durchzuschaltenden Zellen vermieden werden,
dadurch gekennzeichnet, daß der Pufferspeicher (181) aufweist:
- (k+1) Verzögerungsleitungen (189 bis 190), die Verzögerungen zwischen 0 und k·Tc bewirken und deren Ausgänge an Eingänge der räumlichen Schaltmatrix (182) gekoppelt sind,
- (k+1) Kombinierglieder (187 bis 188) mit je n Eingängen und einem Ausgang, der an einen Eingang einer Verzögerungsleitung (189 bis 190) angeschlossen ist,
- n Diffusoren (185 bis 186), die je (k+1) Ausgänge und einen Eingang besitzen, der einen Eingang des Pufferspeichers (181) bildet,
- (k+1)·n optische Tore (P1 bis P272), die je einen Ausgang eines der n Diffusoren (185 bis 186) an einen Eingang eines der (k+1) Kombinierglieder (187 bis 188) anschließen und von den Steuermitteln (52) so gesteuert werden, daß jeder Diffusor (185 bis 186) in jedem Augenblick an nur ein Kombinierglied (187 bis 188) angeschlossen ist.

2. Optische Schaltmatrix nach Anspruch 1, die Zellen empfängt, deren ursprüngliche zeitlich Reihenfolge durch Permutation innerhalb von P Zellen enthaltenden Gruppen verändert worden ist, dadurch gekennzeichnet, daß zur Wiederherstellung der zeitlichen Reihenfolge innerhalb jeder Gruppe mit P Zellen die Steuermittel (52) Mittel (200, 202, 203) aufweisen, um die Speicherdauer jeder Zelle im Pufferspeicher (181) so auszuwählen, daß P Unterwarteschlangen in jeder Warteschlange entsprechend einem Ausgang gebildet werden, wobei jede für einen gegebenen Ausgang bestimmte Zelle in eine der Unterwarteschlangen der Warteschlange entsprechend diesem Ausgang abhängig von Leitweginformationen eingetragen wird, die den ursprünglichen Rang dieser Zelle in einer Gruppe von P Zellen angeben, während die für einen gegebenen Ausgang bestimmten Zellen ausgelesen werden, indem nacheinander eine Zelle in jeder Unterwarteschlange entsprechend diesem Ausgang gelesen wird und indem diese Unterwarteschlangen in einer vorbestimmten Reihenfolge gelesen werden.

## Claims

1. Photonic switching matrix having n inputs and n outputs for switching data in the form of fixed length cells asynchronously time-division multiplexed onto optical fibers, comprising:
- a plurality of wavelength converters (183, ..., 184) at respective inputs of the matrix (180) to assign a wavelength to each cell applied to an input of the matrix;
- an optical buffer (181) common to all the outputs of the matrix (180) for storing each cell for a duration selectable between 0 and k.T_{c} where k is an integer and T_{c} is the duration of cell;
- a space routing stage (182) comprising a filter (194, ..., 195) for each output of the matrix (180) passing to a given output only cells having a given wavelength; and
- control means (52) for controlling the converters (183, ..., 184) and the buffer (181) according to routing information indicating for each cell the output of the matrix to which said cell is addressed and for selecting the duration for which each cell is stored in the buffer (181) so as to construct a queue for each output to avoid conflicts between two cells to be switched to the same output;
characterised in that the buffer (181) comprises:
- (k+1) delay lines (189, ..., 190) respectively introducing time-delays 0, ..., k.T_{c} and having outputs connected to inputs of the space routing stage (182);
- (k+1) combiners (187, ..., 188) each having an output connected to an input of a delay line (189, ..., 190) and n inputs;
- n splitters (185, ..., 186) each having an input constituting an input of the buffer (181) and (k+1) outputs; and
- (k+1).n optical gates (P1, ..., P272) each connecting an output of one of the n splitters (185, ..., 186) to an input of one of the (k+1) combiners (187, ..., 188) and controlled by the control means (52) so that each splitter (185, ..., 186) is connected to a single combiner (187, ..., 188) at a time.

2. Photonic switching matrix according to claim 1 receiving cells whose original chronological order has been modified by permutation within groups containing P cells;
characterised in that to re-establish the chronological order in each group containing P cells the control means (52) comprise means (200, 202, 203) for selecting the duration for which each cell is stored in the buffer (181) in such a way as to constitute P sub-queues in each queue representing an output, each cell addressed to a given output being written into one of the sub-queues of the queue for that output on the basis of routing information indicating the initial rank of this cell in a group of P cells, the cells addressed to a given output being read by reading successively a cell in each sub-queue for the output concerned, said sub-queues being read in a predetermined order.
